# EUROPÄISCHE PATENTANMELDUNG

(11) **EP 2 626 124 A1**
(43) Veröffentlichungstag der Anmeldung: **14.08.2013**
(21) Anmeldenummer: 12155090.9
(22) Anmeldetag: 13.02.2012
(51) Int. Cl.: B01D 53/00, C21B 13/00

(54) **Verfahren und Vorrichtung zur Reduktion von eisenoxidhaltigen Einsatzstoffen**

(71) Anmelder: Siemens VAI Metals Technologies GmbH, 4031 Linz (AT)
(72) Erfinder: Millner, Robert, 3382 Loosdorf (AT); Rosenfellner, Gerald, 3352 Ertl (AT)
(74) Vertreter: Maier, Daniel Oliver

(57) **Zusammenfassung**

Die Erfindung betrifft ein Verfahren und eine Vorrichtung zur Reduktion von eisenoxidhältigen Einsatzstoffen, bei dem einem die eisenoxidhältigen Einsatzstoffe enthaltenden Reduktionsaggregat (1) ein Reduktionsgas zugeführt wird. Das Reduktionsgas wird dadurch erzeugt, dass ein Prozessgas mit Reduktionspotential in eine Heizeinrichtung (3) zum Aufheizen des Prozessgases eingebracht und als Reduktionsgas aus diesem abgezogen wird. In der Heizeinrichtung (3) findet eine Übertragung von Wärmeenergie auf das Prozessgas statt, wobei die Wärmeenergie in der Heizeinrichtung durch Verbrennung eines Koksofengas umfassenden Brenngases, unter Zugabe von technisch reinem Sauerstoff, gebildet wird. Die bei der Verbrennung entstehende Flamme weist eine adiabatische Flammentemperatur von größer als 1000°C auf.

## Beschreibung

### Technisches Gebiet

Die Erfindung betrifft ein Verfahren zur Reduktion von eisenoxidhältigen Einsatzstoffen, bei dem einem die eisenoxidhältigen Einsatzstoffe enthaltenden Reduktionsaggregat ein Reduktionsgas zugeführt wird. Das Reduktionsgas wird dadurch erzeugt, dass ein Prozessgas mit Reduktionspotential in einer Heizeinrichtung auf eine für die Reduktion der eisenoxidhältigen Einsatzstoffen geeignete Temperatur, insbesondere auf eine Temperatur von größer als 800°C, aufgeheizt wird. Die Aufheizung des Prozessgases in der Heizeinrichtung erfolgt mittels direktem Wäremetausch des Prozessgases mit in der Heizeinrichtung durch Verbrennung gebildeten Verbrennungsprodukten.

Weiters betrifft die Erfindung eine Vorrichtung zur Durchführung des Verfahrens, umfassend ein Reduktionsaggregat mit einer Topgasabfuhrleitung zur Abfuhr von Topgas aus dem Reduktionsaggregat, eine Heizeinrichtung zum Aufheizen eines Prozessgases mit einer in das Reduktiosaggregat mündenden Reduktionsgasleitung und mit zumindest jeweils einer in die Heizeinrichtung mündenden Brenngaszufuhrleitung zur Zufuhr von Brenngas, einer Sauerstoffzufuhrleitung zur Zufuhr von technisch reinem Sauerstoff und zumindest einer Prozessgaszufuhrleitung zur Zufuhr des Prozessgases.

### Stand der Technik

In Zusammenhang mit der Reduktion von eisenoxidhältigen Einsatzstoffen in einem Reduktionsaggregat ist aus dem Stand der Technik bekannt, einem CO₂-hältigen Gas mittels einer CO₂-Abtrenneinrichtung einen großen Teil des darin enthaltenen CO₂ abzutrennen, um daraus ein Prozessgas mit Reduktionspotential zu erhalten. Das bedeutet, dass das Prozessgas nach der Abtrennung des CO₂ einen hohen Anteil an CO beziehungsweise H₂ enthält, welches, wenn es mit eisenoxidhältigen Einsatzstoffen in Kontakt tritt, die eisenoxidhältigen Einsatzstoffe reduziert und selbst dabei oxidiert wird. Die Temperatur des aus der CO₂-Abtrenneinrichtung abgezogenen Prozessgases liegt üblicherweise bei etwa 40°C. Um im Reduktionsaggregat eine Reduktion der eisenoxidhältigen Einsatzstoffe mit ausreichender Geschwindigkeit zu gewährleisten, muss das Prozessgas vor dessen Zuführung als Reduktionsgas in das Reduktionsaggregat auf ca. 800°C aufgeheizt werden. Diese Aufheizung erfolgt oftmals dadurch, dass eine erste Teilmenge des Prozessgases eine Heizeinrichtung durchströmt und der Heizeinrichtung eine zweite Teilmenge des Prozessgases als Brenngas zugeführt wird. Dieses Brenngas wird dabei unter Zugabe eines sauerstoffhältigen Gases verbrannt. Die bei dieser Verbrennung gebildete Wärmeenergie wird durch direkten Wärmetausch auf die erste Teilmenge des Prozessgases übertragen, wobei die, die Heizeinrichtung durchströmende erste Teilmenge des Prozessgases, als Reduktionsgas mit einer zur Reduktion der eisenoxidhältigen Einsatzstoffe geeigneten Temperatur abgezogen wird.

Das der Heizeinrichtung zugeführte Prozessgas weist auf Grund der vorangegangenen CO₂-Abtrennung einen hohen Anteil an CO beziehungsweise H₂ Gas auf, und weist daher grundsätzlich ein hohes Reduktionspotential auf. Grundsätzlich deshalb, weil das Prozessgas eine zur Durchführung einer rasch ablaufenden Reduktionsreaktion zu geringe Temperatur aufweist. Die zweite Teilmenge des Prozessgases, welche der Heizeinrichtung als Brenngas zugeführt wird, wird bei der Verbrennung mit dem sauerstoffhältigen Gas oxidiert, das bedeutet, dass der hohe Anteil an CO in diesem Brenngas durch Oxidation mit dem sauerstoffhältigen Gas zu CO₂ oxidiert wird. Der zweiten Teilmenge des Prozessgases wird dadurch ein beträchtlicher Anteil an reduktionsfähigem CO entzogen. Insgesamt betrachtet ist daher der Anteil an reduktionsfähigen Bestandteilen im Reduktionsgas, welches aus der Heizeinrichtung abgezogen wird, geringer, als im gesamten Prozessgas, welches der Heizeinrichtung zugeführt wird. Die mittels des vorangegangenen Verfahrens durchgeführte Aufheizung des Prozessgases geht somit auf Kosten des Reduktionspotentials des Prozessgases und ist daher nachteilig im Zusammenhang mit der Reduktion von eisenoxidältigen Einsatzstoffen in einem Reduktionsaggregat.

Das sauerstoffhältige Gas, welches dem Brenngas zugeführt wird, ist oftmals Luft, da Luft im Gegensatz zu reinem Sauerstoff oder im Gegensatz zu Gasgemischen mit einem höheren Anteil an Sauerstoff als Luft, billiger und jederzeit in großen Mengen verfügbar ist. Die Verbrennung des Brenngases mit Luft ist daher oftmals eine bevorzugte Variante in solchen Verfahren. Jedoch enthält Luft einen hohen Anteil an Stickstoff. Dieser in der Luft enthaltene Stickstoff wird während der Verbrennung mit dem Brenngas teilweise zu Stickoxiden oxidiert. Das aus der Heizeinrichtung abgezogene Reduktionsgas enthält daher Anteile aus Stickstoff, welche kein Reduktionspotential besitzen. Diese Anteile aus Stickstoff spielen daher bei der Reduktion der eisenoxidhältigen Einsatzstoffe keine Rolle. Die einzige Eigenschaft, die diese Anteile aus Stickstoff in diesem Zusammenhang bewirken, ist, dass sie im Reduktionsgas einen bestimmten Volumsanteil einnehmen und daher den Anteil an reduktionsfähigen Anteilen pro Volumseinheit Reduktionsgas verringern. Es sind daher, im Vergleich zu Reduktionsgas ohne Anteile an Stickstoff, höhere Mengen an Reduktionsgas erforderlich, um im Reduktionsaggregat pro Zeiteinheit dieselbe Masse an reduzierten Einsatzstoffen zu erhalten.

Aus dem Stand der Technik ist bekannt, das genannte Problem dadurch zu lösen, dass dem stickstoffhältigen Reduktionsgas vor Zuführung in das Reduktionsaggregat der Stickstoff entzogen wird. Dies hat den Nachteil, dass zusätzliche Einrichtungen zur Abtrennung von Stickstoff aus Gasen notwendig sind, die teuer sind und gewartet werden müssen. Oftmals wird das dem Reduktionsaggregat zugeführte stickstoffhältige Reduktionsgas nach dessen Verbrauch bei der Reduktion der eisenoxidhältigen Einsatzstoffe im Reduktionsaggregat als Topgas wieder aus diesem abgezogen und in die Umwelt entlassen. Dies kann Probleme bei der Einhaltung von Umweltschutzauflagen bereiten.

Wird dem Brenngas statt Luft technisch reiner Sauerstoff zugemischt, so ergibt sich ein wesentlicher Nachteil dadurch, dass technisch reiner Sauerstoff teuer ist, und immer in ausreichenden Mengen vorhanden sein muss, um im Reduktinsaggregat eine bestimmte Ausbringmenge an reduzierten Einsatzstoffen pro Zeiteinheit sicherzustellen.

### Zusammenfassung der Erfindung

### Technische Aufgabe

Die Erfindung hat daher zur Aufgabe, ein Verfahren zur Reduktion von eisenoxidhältigen Einsatzstoffen zu finden, bei dem das Reduktionspotential eines CO- beziehungsweise H₂-hältigen Prozessgases bei der Aufheizung zu einem Reduktionsgas erhalten bleibt und die bei der Aufheizung des Prozessgases benötigte Menge an technisch reinem Sauerstoff beziehungsweise der Stickstoffgehalt im Reduktionsgas reduziert wird, wobei gleichzeitig die Wirtschaftlichkeit des Verfahrens im Vergleich zum Stand der Technik höher ist.

Eine weitere Aufgabe der Erfindung ist es, eine Vorrichtung zur Durchführung des Verfahrens zu finden.

### Technische Lösung

Die Aufgabe wird gelöst durch ein Verfahren zur Reduktion von eisenoxidhältigen Einsatzstoffen, bei dem einem die eisenoxidhältigen Einsatzstoffe enthaltenden Reduktionsaggregat ein Reduktionsgas zugeführt wird, wobei das Reduktionsgas dadurch erzeugt wird, dass ein Prozessgas mit Reduktionspotential in eine Heizeinrichtung zum Aufheizen des Prozessgases eingebracht und als Reduktionsgas aus diesem abgezogen wird, und in der Heizeinrichtung eine Übertragung von Wärmeenergie auf das Prozessgas erfolgt, wobei die Wärmeenergie in der Heizeinrichtung durch Verbrennung eines Koksofengas umfassenden Brenngases, unter Zugabe von technisch reinem Sauerstoff, gebildet wird, wobei die bei der Verbrennung entstehende Flamme eine adiabatische Flammentemperatur größer als 1000°C, bevorzugt größer als 1300°C, besonders bevorzugt größer als 1500°C, aufweist und die Übertragung der Wärmeenergie auf das Prozessgas durch Mischung des Prozessgases mit den bei der Verbrennung des Brenngases gebildeten Verbrennungsprodukten erfolgt.

Das Reduktionsaggregat kann insbesondere als Direktreduktionsaggregat mit Wirbelschichtverfahren oder Festbettverfahren, als Reduktionsschacht oder als Hochofen ausgebildet sein.

Das Prozessgas weist zwar ein Reduktionspotential auf, das heißt, der Anteil an CO₂ und/oder H₂ ist genügend hoch, um eine Reduktion von eisenoxidhältigen Einsatzstoffen zu ermöglichen, jedoch weist es oftmals eine niedrige Temperatur auf, deshalb wird das Prozessgas vor Zuführung in das Reduktionsaggregat in die Heizeinrichtung zum Aufheizen des Prozessgases eingebracht, aus dem es als Reduktionsgas abgezogen und dem Reduktionsaggregat zugeführt wird. Das Prozessgas kann beispielsweise Exportgas aus einer Anlage zur Erzeugung von Roheisen und/oder Stahlvorprodukten sein.

Der Heizeinrichtung wird zusätzlich zum Prozessgas das Brenngas zugeführt, wobei das Brenngas unter Zugabe von technisch reinem Sauerstoff verbrannt wird. Die dabei gebildete Wärmeenergie wird durch direkten Wärmetausch auf das Prozessgas übertragen, indem die bei der Verbrennung gebildeten Verbrennungsprodukte ihre kinetische Energie auf das Prozessgas übertragen. Die bei der Verbrennung gebildete Flamme weist eine adiabatische Flammentemperatur von größer als 1000°C, bevorzugt größer als 1300°C, besonders bevorzugt größer als 1500°C auf.

Als adiabatische Flammentemperatur wird diejenige Temperatur bezeichnet, die sich nach dem vollständigen Ablauf der Verbrennung ergibt, wenn das Gasgemisch aus Brenngas und technischen Sauerstoff während der Verbrennung keinerlei Wärme mit der Umgebung ausgetauscht hat. Da eine Flamme normalerweise heißer ist als ihre Umgebung, verlieren Flammen während der Verbrennung Wärme. Die tatsächliche Flammentemperatur liegt deshalb unterhalb der adiabatischen Flammentemperatur.

Das Brenngas umfasst Koksofengas, es kann aber auch noch weitere Gase umfassen, bevorzugt sind Gase mit einem geringen Anteil an CO₂ und/oder H₂O und einem hohen Anteil an CO, H₂, CH₄ und/oder anderen organischen Stoffen. Generell sollen diese Gase einen hohen Anteil an Stoffen mit hohem Brennwert enthalten. Dies ist deshalb wichtig, um bei der Verbrennung des Brenngases mit dem technisch reinen Sauerstoff die adiabatische Flammentemperatur von größer als 1000°C, bevorzugt größer als 1300°C, besonders bevorzugt größer als 1500°C zu erreichen. Vorzugsweise ist der Anteil des Koksofengases im Brenngas größer als 80%, besonders bevorzugt größer als 90%, noch bevorzugter größer als 99%. Das Brenngas kann auch ausschließlich aus Koksofengas bestehen, das heißt der Anteil des Koksofengases im Brenngas liegt dann bei 100%.

Koksofengas ist ein Gas, welches aus einer Anlage zur Herstellung von Koks, insbesondere einer Kokerei, exportiert beziehungsweise abgezogen wird und einen Anteil an Sauerstoff in molekularer Form (O₂) aufweist.

Dadurch ergibt sich der Vorteil, dass dem Brenngas bei der Verbrennung in der Heizeinrichtung weniger technisch reiner Sauerstoff zugegeben werden muss. Die Nutzung Koksofengases als Sauerstofflieferant ermöglicht eine wirtschaftliche Nutzung beziehungsweise Wiederverwendung des Koksofengases.

Das Koksofengas enthält aber neben Sauerstoff auch einen hohen Anteil an gasförmigen aromatischen Kohlenwasserstoffen, insbesondere BTX-Gase (Benzol, Toluol Ethylbenzol, Xylole), Teere und weitere gasförmige oder feinteilchenförmige Komponenten, die im beschriebenen Verfahren unerwünscht sind. Diese Komponenten verkleben beispielsweise Innenflächen von Koksofengas führenden Leitungen, sie packen an Innenflächen von Koksofengas speichernden oder Koksofengas verarbeitenden Anlagen an. Diese Komponenten des als Brenngas in der Heizeinrichtung eingesetzte Koksofengases können im Falle einer unvollständigen Verbrennung in der Heizeinrichtungen beispielsweise kondensieren und der Heizeinrichtung und/oder in den der Heizeinrichtung nachgeordneten Leitungen zu Verklebungen oder Anpackungen führen. Weiters werden unvollständig Verbrannte Komponenten mit dem aus der Heizeinrichtung abgezogenen Reduktionsgases in das Reduktionsaggregat transportiert und können dort einen Schaden, beispielsweise durch Verklebungen und Anpackungen, anrichten. Unvollständig verbrannt bedeutet dabei, dass die im Koksofengas vorhandenen unerwünschten Komponenten nach der Verbrennung in einem Zustand vorliegen, dass die Gefahr von Schäden durch Verklebungen, Verklumpungen und/oder Anpackungen gegeben ist.

Die bei der Verbrennung gebildete Flamme weist eine adiabatische Flammentemperatur von größer als 1000°C, bevorzugt größer als 1300°C, besonders bevorzugt größer als 1500°C auf.

Auf Grund der dieser hohen adiabatischen Flammentemperatur werden alle im Koksofengas vorhandenen unerwünschten Komponenten bei der Verbrennung vollständig verbrannt. Das heißt, die unerwünschten Komponenten liegen nach der Verbrennung in einem Zustand vor, bei dem die Gefahr von Schäden durch Verklebungen, Verklumpungen und/oder Anpackungen nicht mehr gegeben ist. Die unerwünschten Komponenten, insbesondere lange Kohlenwasserstoffe, werden bei der Verbrennung zumindest teilweise gespalten. Das bedeutet, dass die unerwünschten Komponenten durch die hohe adiabatische Flammentemperatur während der Verbrennung "zerschlagen" beziehungsweise zumindest teilweise in ihre atomaren Bestandteile zerlegt und/oder gespalten werden. Diese Verbrennungsprodukte, welche bei der Verbrennung "zerschlagen" wurden, beziehungsweise zumindest teilweise gespalten wurden, haben zudem die Eigenschaft, mit anderen Stoffen, insbesondere mit dem in die Heizeinrichtung eingebrachten Prozessgas, eine Bindung einzugehen, wodurch sich eine optimale Mischung des Prozessgases mit den bei der Verbrennung des Brenngases gebildeten Verbrennungsprodukten ergibt. Ein weiterer Vorteil, der sich durch die Eigenschaft der atomar vorliegenden Verbrennungsprodukte ergibt ist, dass die Reaktionswege kurz bleiben. Der Reaktionsweg ist jener Weg, den die im atomaren Zustand vorliegenden Verbrennungskomponenten im Durchschnitt benötigen, bis sie eine Bindung mit dem Prozessgas beziehungsweise mit den Bestandteilen, aus dem das Prozessgas zusammengesetzt ist, eingehen. Dadurch ist eine schnelle Übertragung der Wärmeenergie auf das Prozessgas, insbesondere auf die Bestandteile des Prozessgases, durch Mischung des Prozessgases mit den bei der Verbrennung des Brenngases gebildeten Verbrennungsprodukten gewährleistet. Das für die Mischung benötigte Volumen und entsprechend die räumliche Ausdehnung beziehungsweise die Dimension der Heizeinrichtung kann daher kleiner als bei aus dem Stand der Technik bekannten ähnlichen Heizeinrichtungen dimensioniert werden.

Das Koksofengas kann daher ohne vorangehende, komplizierte und teure Aufbereitung direkt als Brenngas in der Heizeinrichtung eingesetzt werden, ohne dass die Gefahr von Schäden durch Verklebungen, Verklumpungen und/oder Anpackungen in der erfindungsgemäßen Vorrichtung zur Reduktion von eisenoxidhältigen Einsatzstoffen gegeben ist.

Eine bevorzugte Ausführungsform der Erfindung ist dadurch gekennzeichnet, dass das Prozessgas aus einer CO₂ - Abtrenneinrichtung stammt.

Die CO₂-Abtrenneinrichtung ist beispielsweise eine PSA-Vorrichtung (Druckwechsel-Adsorption), eine VPSA-Vorrichtung (Vakuum-Druckwechsel-Adsorption) oder eine Vorrichtung zur Trennung von Gasmischungen mittels Membrantechnik und/oder chemischer Reaktion. Das aus der CO₂-Abtrenneinrichtung stammende Prozessgas weist ein Reduktionspotential auf, das heißt, das Prozessgas hat einen hohen Anteil an CO und/oder H₂ und kann daher die eisenoxidhältige Einsatzstoffe zu Eisen reduzieren. Der CO₂-Abtrenneinrichtung wird ein CO₂-hältiges Feedgas zugeführt, welches nach Abtrennung von zumindest einer Teilmenge des im Feedgas enthaltenen CO₂ als Prozessgas aus der CO₂-Abtrenneinrichtung abgezogen wird. Das Feedgas ist beispielsweise ein CO₂-hältiges Exportgas, das aus einer Anlage zur Erzeugung von Roheisen und/oder Stahlvorprodukten stammt. Insbesondere kann diese Anlage eine COREX^{®}-Anlage, eine FINEX^{®}-Anlage, ein Schmelzreduktionsaggregat, ein Schachtreaktor zur Reduktion von eisenoxidhältigen Stoffen, ein Hochofen ein Wirbelschichtreaktor oder ein Festbettreduktionsreaktor oder auch eine Direktreduktionsanlage sein. Bei der Abtrennung des CO₂ aus dem Feedgas entsteht einerseits das Prozessgas mit einem niedrigeren Anteil an CO₂ als das Feedgas, andererseits ein Restgas mit einem höheren Anteil an CO₂ als das Feedgas.

Diese Ausführungsform bietet den Vorteil, dass Exportgas mit einem ursprünglichen, für die Reduktion von eisenoxidhältigen Einsatzstoffen zu niedrigen Reduktionspotential, nach Abtrennung von CO₂ aus dem Exportgas als Reduktionsgas in einem Reduktionsaggregat zur Reduktion von eisenoxidhältigen Einsatzstoffen wiederverwertet werden kann.

Eine bevorzugte Ausführungsform der Erfindung ist dadurch gekennzeichnet, dass das Brenngas zumindest eine Teilmenge des Prozessgases umfasst.

Dem Brenngas wird vor der Zuführung in die Heizeinrichtung zumindest eine Teilmenge des aus der CO₂-Abtrenneinrichtung stammenden Prozessgases zugemischt. Bei der Verbrennung des Brenngases in der Heizeinrichtung wird dabei zwar das Reduktionspotential der dem Brenngas zugemischten Teilmenge des Prozessgases reduziert, jedoch ergibt sich aus dieser bevorzugten Ausführungsform der große Vorteil, dass Mengen und/oder Druckschwankungen des Koksofengases ohne großen Aufwand durch variable Zumischung der Teilmenge des Prozessgases ausgeglichen werden können und damit konstante Verhältnisse im gesamten Verfahren, insbesondere bei der Reduktion der eisenoxidhältigen Einsatzstoffe im Reduktionsaggregat, geschaffen werden. Zusätzlich ergibt sich der Vorteil, dass dem Koksofengas umfassenden Brenngas jene Menge an Prozessgas zugemischt werden kann, dass die Zündtemperatur des Brenngases unter die Temperatur des Brenngases abgesenkt wird.

Eine weitere bevorzugte Ausführungsform ist dadurch gekennzeichnet, dass das Brenngas aus Koksofengas besteht.

Das gesamte Prozessgas wird in der Heizeinrichtung aufgeheizt ohne sein Reduktionspotential zu verlieren - da es in der Heizeinrichtung nicht mit Sauerstoff verbrannt wird. Das gessamte Prozessgas wird in der Heizeinrichtung mit den bei der Verbrennung des Koksofengas gebildeten Verbrennungsprodukten gemischt und nicht verbrannt.

Dadurch ergibt sich der Vorteil, dass das gesamte, schon im Prozessgas vorhandene Reduktionspotential auch im von der Heizeinrichtung abgezogenen Reduktionsgas zur Verfügung steht und das gesamte Reduktionspotential bei der Reduktion der eisenoxidhältigen Einsatzstoffe im Reduktionsaggregat genutzt werden kann.

Eine weitere Ausführungsform der Erfindung ist dadurch gegeben, dass zumindest eine Teilmenge des Prozessgases vor dem Einbringen in die Heizeinrichtung einer Vorwärmung durch indirekten Wärmetausch unterzogen wird. Wird in die Heizeinrichtung bereits vorgewärmtes Prozessgas eingebracht, so ist, bei gegebener Temperatur des Reduktionsgases, die zu "überwindende" Temperaturdifferenz verglichen mit der Temperaturdifferenz zwischen einem nicht vorgewärmten Prozessgas und der Temperatur des Reduktionsgases geringer.

Dadurch ergibt sich der Vorteil, dass weniger Brenngas für die Aufheizung des Prozessgases eingesetzt werden muss, beziehungsweise ein Brenngas mit schlechterer Qualität, insbesondere mit einem geringeren Anteil an brennbaren Komponenten, eingesetzt werden kann.

Eine weitere Ausführungsform der Erfindung ist dadurch gekennzeichnet, dass das Brenngas und/oder der technisch reine Sauerstoff vor der Verbrennung des Brenngases in der Heizeinrichtung einer Vorwärmung durch indirekten Wärmetausch unterzogen wird.

Eine Ausführungsform der Erfindung ergibt sich dadurch, dass die Vorwärmung der Teilmenge des Prozessgases auf eine Temperatur größer als 300°C, vorzugsweise größer als 400°C, noch bevorzugter größer als 600°C erfolgt.

Erfolgt die Vorwärmung mittels indirekten Wärmetauschern mit metallischen Leitungen, so tritt bei den genannten Temperaturen kein sogenanntes "metal dusting" auf oder wenn, dann nur in geringem Umfang. Unter "metal dusting" ist die Zerstörung von metallischen Stoffen, beispielsweise die metallischen Leitungen des indirekten Wärmetauschers, durch Kontakt mit kohlenmonoxidhältigen Stoffen zu verstehen.

Eine weitere Ausführungsform der Erfindung ergibt sich, wenn das aus der Heizeinrichtung abgezogene Reduktionsgas eine Temperatur größer 750°C, vorzugsweise größer 830°C, besonders bevorzugt größer 850°C, hat.

Wird das Reduktionsgas mit den genannten Temperaturen in das Reduktionsaggregat eingeleitet, so wird eine optimale Reduktion der eisenoxidhältigen Einsatzstoffe im Reduktionsaggregat gewährleistet.

Eine Ausführungsform ist dadurch gekennzeichnet, dass das Koksofengas vor dessen Verbrennung in der Heizeinrichtung einem Reinigungsvorgang unterzogen wird.

Der Reinigungsvorgang besteht insbesondere aus einer Grobreinigung, insbesondere aus einer Trocken- oder Nassentstaubung. Damit ergibt sich der Vorteil, dass größere, mit dem Koksofengasstrom mitbewegte Feststoffteilchen aus dem Koksofengasstrom entfernt werden und aus diesem Grund nachfolgende Einrichtungen und Anlagen des beschriebenen Verfahrens nicht negativ beeinflusst werden.

Eine weitere bevorzugte Ausführungsform der Erfindung zeichnet sich dadurch aus, dass das bei der Reduktion der eisenoxidhältigen Einsatzstoffe im Reduktionsaggregat verbrauchte Reduktionsgas als Topgas abgezogen wird und die Vorwärmung der Teilmenge des Prozessgases durch indirekten Wärmetausch mit zumindest einer Teilmenge des Topgases und/oder mit einem in der CO₂-Abtrenneinrichtung anfallenden Restgas, und/oder mit einer Gasmischung aus der Teilmenge des abgezogenen Topgases und dem Restgas erfolgt.

Wird der CO₂-Abtrenneinrichtung CO₂-hältiges Gas zugeführt, so wird durch die Abtrennung von CO₂ aus diesem zugeführten Gas einerseits das Prozessgas mit einem geringeren Anteil an CO₂ als das zugeführte Gas und andererseits das Restgas mit einem höheren Anteil an CO₂ als das zugeführte Gas erzeugt, wobei unmittelbar nach der CO₂-Abtrenneinrichtung das Restgas eine höhere Temperatur als das Prozessgas aufweisen kann. Die fühlbare Wärme des Topgases und/oder des Restgases und/oder des Gasgemisches aus Topgas und Restgas wird in diesem indirekten Wäretauschprozess genutzt um die Teilmenge des Prozessgases vorzuwärmen, woraus sich der Vorteil ergibt, dass weniger Energie aus anderen Quellen für die Vorwärmung aufgewendet werden muss.

Eine bevorzugte Ausführungsform der Erfindung ergibt sich dadurch, dass das aus der Heizeinrichtung abgezogene Reduktionsgas vor dessen Zuführung in das Reduktionsaggregat einer Teilverbrennung mit technisch reinem Sauerstoff und/oder dem Brenngas unterzogen wird.

Dabei wird ein Teil des Reduktionsgases unter Zugabe von technisch reinem Sauerstoff verbrannt, wodurch sich der Vorteil ergibt, dass die Temperatur des Reduktionsgases an die Verhältnisse im Reduktionsaggregat kurzfristig angepasst, insbesondere feinjustiert, werden kann. Beispielsweise kann damit die Temperatur des Reduktionsgases zumindest um 20°C, vorzugsweise zumindest um 30°C, noch bevorzugter zumindest um 40°C angehoben werden. Damit kann rasch auf Schwankungen im Reduktionsaggregat, beispielsweise auf Schwankungen der sich im Reduktionsaggregat befindenden Menge der eisenoxidhältigen Einsatzstoffe reagiert werden.

Ein weiterer Gegenstand der Erfindung ist eine Vorrichtung zur Durchführung des Verfahrens umfassend ein Reduktionsaggregat mit einer Topgasabfuhrleitung zur Abfuhr von Topgas aus dem Reduktionsaggregat, eine Heizeinrichtung zum Aufheizen eines Prozessgases mit einer in das Reduktionsaggregat mündenden Reduktionsgasleitung und mit zumindest jeweils einer in die Heizeinrichtung mündenden Brenngaszufuhrleitung zur Zufuhr von Brenngas, einer Sauerstoffzufuhrleitung zur Zufuhr von technisch reinem Sauerstoff und einer ersten Prozessgaszufuhrleitung zur Zufuhr zumindest einer ersten Teilmenge eines Prozessgases, wobei die Brenngaszufuhrleitung aus einer Anlage zur Herstellung von Koks, insbesondere eine Kokerei und/oder aus einer Anlage zur Speicherung von Koksofengas, insbesondere ein Gasometer, entspringt.

Ortsangaben wie "vor" oder "nach" bedeuten dabei immer, in Richtung der Strömungsgeschwindigkeit des entsprechenden Gases, insbesondere das Brenngas, das Topgas, das Reduktionsgas, das Restgas und das Gasgemisch, gesehen.

Gegebenenfalls sind in einen oder mehreren der genannten Leitungen Einrichtungen zur Beeinflussung des Druckes und/oder zur der Menge der in den entsprechenden Leitungen strömenden Gase vorhanden. Bei diesen Einrichtungen zur Beeinflussung des Druckes und/oder zur Beeinflussung der Menge kann es sich insbesondere um Druckventile, Druckregelventile oder Kompressoren handeln.

Unter technisch reinem Sauerstoff versteht man ein Gasgemisch mit einem Sauerstoffanteil von mehr als 90%, vorzugsweise mehr als 95%, noch bevorzugter mehr als 99%. Die Brenngaszufuhrleitung kann aus sämtlichen Anlagen entspringen, in denen Koksofengas produziert, gespeichert, verarbeitet oder verbraucht wird.

Oftmals wird derartiges Koksofengas einfach verbrannt, ohne die darin enthaltene Energie in einem weiteren Verfahren, insbesondere ein Verfahren zur Reduktion von eisenoxidhältigen Einsatzstoffen, zu nutzen.

Der Vorteil der erfindungsgemäßen Vorrichtung ist, dass Koksofengas, welches in der Anlage zur Herstellung von Koks und/oder in der Anlage zur Speicherung von Koksofengas anfällt oder gespeichert wird, in einem Verfahren zur Reduktion von eisenoxidhältigen Einsatzstoffen, gegebenenfalls nach einer Aufbereitung durch Verbrennung, verwertet werden kann.

Eine bevorzugte Ausführungsform der Erfindung ist dadurch gekennzeichnet, dass in der Prozessgaszufuhrleitung eine CO₂-Abtrenneinrichtung zur Abtrennung von CO₂ aus einem, über eine Feedgasleitung eingebrachten Feedgas, angeordnet ist.

Eine Ausführungsform der Erfindung ist dadurch gekennzeichnet, dass eine in die Brenngaszufuhrleitung mündende zweite Prozessgaszufuhrleitung zur Zufuhr zumindest einer zweiten Teilmenge des aus der CO₂-Abtrenneinrichtung stammenden Prozessgases vorhanden ist.

Die Brenngasleitung verbindet insbesondere die erste Prozessgasleitung direkt mit der Brenngasleitung. In der zweiten Prozessgasleitung ist gegebenenfalls eine Einrichtung zur Beeinflussung des Druckes und/oder der Menge des Prozessgases in der zweiten Prozessgasleitung vorhanden. Insbesondere ist eine solche Einrichtung geeignet, den in den entsprechenden Leitungen strömenden Gase vorhanden

Eine weitere Ausführungsform der Erfindung ergibt sich dadurch, dass in der ersten Prozessgaszufuhrleitung eine Einrichtung zur Vorwärmung der ersten Teilmenge des Prozessgases angeordnet ist.

Diese Einrichtung zur Vorwärmung der ersten Teilmenge des Prozessgases ist insbesondere als Einrichtung für einen indirekten Wärmetausch ausgebildet.

Eine andere Ausführungsform der Erfindung ist dadurch gegeben, dass in der Brenngaszufuhrleitung, vor der in die Brenngaszufuhrleitung mündenden zweiten Prozessgaszufuhrleitung, eine Reinigungseinrichtung zur Reinigung von Gasen vorhanden ist.

Die Reinigungseinrichtung kann insbesondere eine Einrichtung zur Nassentstaubung oder Trockenentstaubung sein. Die Reinigungseinrichtung ist geeignet, zumindest grobe Feststoffpartikel aus dem die Reinigungseinrichtung durchströmenden Gas zu filtern.

Bei einer weiteren bevorzugten Ausführungsform mündet in die Einrichtung zur Vorwärmung der ersten Teilmenge des Prozessgases eine Topgaszufuhrleitung zur Zufuhr zumindest einer Teilmenge des Topgases und/oder eine Restgaszufuhrleitung zur Zufuhr eines aus der CO₂-Abtrenneinrichtung stammenden Restgases und/oder eine Zufuhrleitung zur Zufuhr eines Gasgemisches aus der Teilmenge des Topgases und des Restgases.

Diese Ausführungsform der erfindungsgemäßen Vorrichtung ermöglicht es, dass die fühlbare Wärme des Topgases und/oder des Restgases und/oder des Gasgemisches aus der Teilmenge des Topgases und des Restgases für die Vorwärmung der ersten Teilmenge des Prozessgases genutzt werden kann. Ist die Einrichtung zur Vorwärmung der ersten Teilmenge des Prozessgases eine Einrichtung zum indirekten Wärmetausch, so ergibt sich der Vorteil, dass im Fall von Undichtheiten durch Abrasion der ersten Prozessgasleitung im Wärmetauscher keine Gefahr einer Entzündung des Prozessgases besteht.

Eine bevorzugte Ausführungsform ist dadurch gekennzeichnet, dass in der Reduktionsgasleitung eine Einrichtung zur Beeinflussung der Temperatur und/oder der chemischen Zusammensetzung des Reduktionsgases angeordnet ist.

Mittels dieser Einrichtung kann die Temperatur des Reduktionsgases vor Zuführung des Reduktionsgases in das Reduktionsaggregat angepasst, insbesondere erhöht werden um eine für die Reduktion der eisenoxidhältigen Einsatzstoffe optimale Temperatur des Reduktionsgases sicherzustellen. Beispielsweise kann damit die Temperatur des Reduktionsgases zumindest um 20°C, vorzugsweise zumindest um 30°C, noch bevorzugter zumindest um 40°C angehoben werden. Damit kann rasch auf Schwankungen im Reduktionsaggregat, beispielsweise auf Schwankungen der sich im Reduktionsaggregat befindenden Menge der eisenoxidhältigen Einsatzstoffe reagiert werden.

Ein weiterer Gegenstand der Erfindung ist die Verwendung der Vorrichtung zur Durchführung des oben beschriebenen Verfahrens.

### Kurze Beschreibung der Zeichnungen

Die Erfindung wird nachfolgend in beispielhafter Weise anhand der beigefügten Figuren erläutert.
Figur 1 zeigt beispielhaft und schematisch das erfindungsgemäße Verfahren und den Aufbau der erfindungsgemäßen Vorrichtung zur Reduktion von eisenoxidhältigen Einsatzstoffen.
Figur 2 zeigt eine optionale vorteilhafte Ausgestaltung des erfindungsgemäßen Verfahrens und einen optionalen vorteilhaften Aufbau der erfindungsgemäßen Vorrichtung zur Reduktion von eisenoxidhältigen Einsatzstoffen.

### Beschreibung der Ausführungsformen

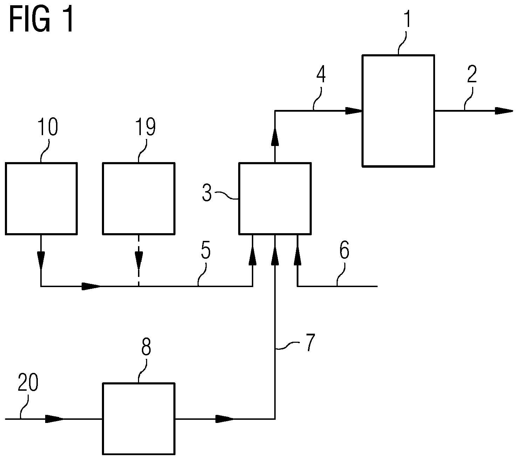

In Figur 1 ist beispielhaft und schematisch ein Verfahren und eine Vorrichtung zur Reduktion von eisenoxidhältigen Einsatzstoffen skizziert, welche das erfindungsgemäße Verfahren und die erfindungsgemäße Vorrichtung umfasst.

Die in Figur 1 eingezeichneten Pfeile kennzeichnen die jeweiligen tatsächlichen und/oder möglichen Strömungsrichtungen der in der erfindungsgemäßen Vorrichtung vorkommenden Gasströme in einem gewöhnlichen Betriebszustand der Vorrichtung beziehungsweise des Verfahrens.

Beim erfindungsgemäßen Verfahren wird einem Reduktionsaggregat (1) ein Reduktionsgas über eine Reduktionsgasleitung (4) zugeführt. Das zugeführte Reduktionsgas durchströmt das Reduktionsaggregat (1), dabei werden die sich im Reduktionsaggregat (1) befindenden eisenoxidhältigen Einsatzstoffe reduziert. Das Reduktionsgas wird dabei verbraucht und als Topgas über die Topgasabfuhrleitung (2) aus dem Reduktionsaggregat (1) abgeführt. Das Reduktionsgas wird dadurch erzeugt, dass Feedgas über eine Feedgasleitung (20) in eine CO₂-Abtrenneinrichtung (8) eingeleitet wird, und aus diesem über eine erste Prozessgaszufuhrleitung (7) als Prozessgas abgezogen wird. Das Prozessgas wird über die in eine Heizeinrichtung (3) mündende erste Prozessgaszufuhrleitung (7) in die Heizeinrichtung (3) eingebracht. Der Heizeinrichtung (3) wird zusätzlich über die Brenngaszufuhrleitung (5) Brenngas und über die Sauerstoffzufuhrleitung (6) technisch reiner Sauerstoff zugeführt. In der Heizeinrichtung (3) wird das Brenngas unter Zugabe des technisch reinen Sauerstoffes verbrannt. Die bei der Verbrennung entstehende Flamme weist beispielsweise eine adiabatische Flammentemperatur größer als 1000°C auf. In der Heizeinrichtung (3) erfolgt eine Mischung des eingebrachte Prozessgases mit den bei der Verbrennung des Brenngases gebildeten Verbrennungsprodukten. Das in die Heizeinrichtung (3) eingebrachte Prozessgas wird dabei aufgeheizt und als Reduktionsgas über die Reduktionsgasleitung (4) aus der Heizeinrichtung (3) abgezogen. Typischerweise wird das Prozessgas mit einer Temperatur von größer als 300°C in die Heizeinrichtung (3) eingebracht und wird als Reduktionsgas mit einer Temperatur von größer als 800°C aus diesem abgezogen. Das in die Heizeinrichtung (3) eingebrachte Brenngas stammt beispielsweise in einer Anlage (10) zur Herstellung von Koks, insbesondere eine Kokerei und/oder aus einer Anlage (19) zur Speicherung von Koksofengas, insbesondere ein Gasometer.

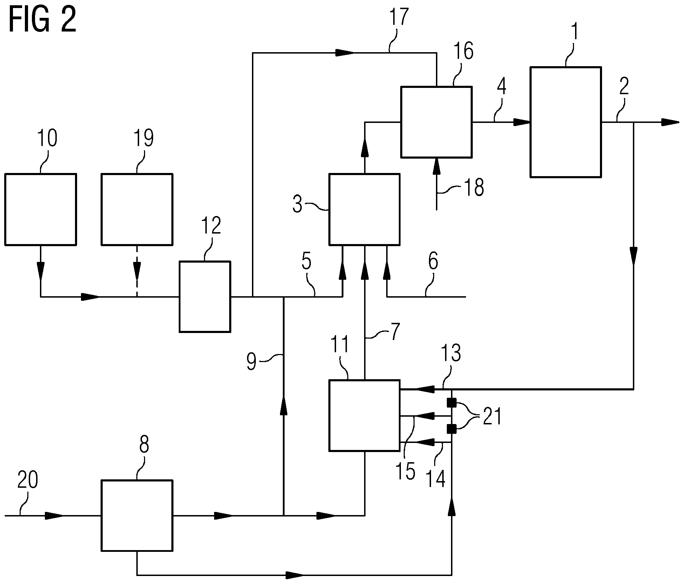

In Figur 2 ist beispielhaft und schematisch eine optionale Ausgestaltung des Verfahrens und eine optionale vorteilhafte Ausgestaltung der Vorrichtung zur Reduktion von eisenoxidhältigen Einsatzstoffen skizziert, welche das erfindungsgemäße Verfahren und die erfindungsgemäße Vorrichtung umfasst.

Die in Figur 2 eingezeichneten Pfeile kennzeichnen die jeweiligen tatsächlichen und/oder möglichen Strömungsrichtungen der in der erfindungsgemäßen Vorrichtung vorkommenden Gasströme in einem gewöhnlichen Betriebszustand der Vorrichtung beziehungsweise des Verfahrens.

Eine weitere Ausführungsform der Erfindung ist dadurch gekennzeichnet, dass dem Brenngas vor der Verbrennung in der Heizeinrichtung (3) über eine zweite Prozessgaszufuhrleitung (9) eine Teilmenge des Prozessgases zugeführt wird. Das Brenngas wird in der Heizeinrichtung (3) unter Zugabe des technisch reinen Sauerstoffes verbrannt. Die der Heizeinrichtung (3) über die erste Prozessgaszufuhrleitung (7) zugeführte Teilmenge des Prozessgases wird dabei auf beispielsweise 800°C erwärmt und aus der Heizeinrichtung (3) als Reduktionsgas über die Reduktionsgasleitung (4) abgezogen. Vor Zuführung des Reduktionsgases in das Reduktionsaggregat (1), wird das Reduktionsgas in einer Einrichtung (16) zur Beeinflussung der Temperatur und/oder der chemischen Zusammensetzung des Reduktionsgases, beispielsweise von 800°C auf 830°C, aufgeheizt. Die Aufheizung erfolgt dadurch, dass das der Einrichtung (16) zur Beeinflussung der Temperatur und/oder der chemischen Zusammensetzung des Reduktionsgases zugeführte Reduktionsgas teilweise mit einem über eine Oxidationsgaszufuhrleitung (18) eingebrachten technisch reinen Sauerstoff und/oder mit einem über eine zweite Brenngaszufuhrleitung (17) eingebrachten Brenngas verbrannt. Das Brenngas ist beispielsweise Koksofengas, welches direkt über die zweite Brenngaszufuhrleitung (17) in die Heizeinrichtung (3) eingebracht wird. Vor der Mündung der zweiten Prozessgaszufuhrleitung (9) in die Brenngaszufuhrleitung (5) und vor der aus der Brenngaszufuhrleitung (5) entspringenden zweiten Brenngaszufuhrleitung (17) ist eine in der Brenngaszufuhrleitung (5) angeordnete Reinigungseinrichtung zur Reinigung von Gasen, beispielsweise ein Filter, angeordnet. Dieser Filter dient der Grobabscheidung von Feststoffpartikeln aus dem Brenngas. Die Brenngasleitung (5) entspringt einer Anlage (10) zur Herstellung von Koks, beispielsweise einer Kokerei, und/oder einer Anlage (19) zur Speicherung von Koksofengas, beispielsweise einem Gasometer. Die der Heizeinrichtung (3) über die erste Prozessgaszufuhrleitung (7) zugeführte Teilmenge des Prozessgases wird, vor dessen Zuführung in einer Einrichtung (11) zur Vorwärmung der ersten Teilmenge des Prozessgases, durch indirekten Wärmetausch beispielsweise auf eine Temperatur von mehr als 300°C gebracht. Das dem Reduktionsaggregat (1) zugeführte Reduktionsgas wird als Topgas über die Topgasleitung (2) aus dem Reduktionsaggregat (1) abgezogen und eine Teilmenge des abgezogenen Topgases wird der Einrichtung (11) zur Vorwärmung der ersten Teilmenge des Prozessgases über die Topgaszufuhrleitung (13) zugeführt. Optional wird der Einrichtung (11) zur Vorwärmung der ersten Teilmenge des Prozessgases ein in der CO₂-Abtrenneinrichtung (8) bei der Abtrennung von CO₂ aus dem Feedgas gebildetes Restgas über die Restgaszufuhrleitung (14) zugeführt. Eine weitere Option ergibt sich, wenn der Einrichtung (11) zur Vorwärmung der ersten Teilmenge des Prozessgases ein Gasgemisch aus Topgas und Restgas über die Zufuhrleitung (15) zur Zufuhr eines Gasgemisches zugeführt wird. Diese unterschiedlichen Optionen der Zufuhr werden über Steuerventile (21) geregelt. Der indirekte Wärmetausch erfolgt über einen Wärmetausch des Topgases und/oder des Restgases und/oder des Gasgemisches aus Topgas und Restgas mit der durch die Einrichtung (11) zur Vorwärmung der ersten Teilmenge des Prozessgases durchströmenden Teilmenge des Prozessgases.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen

### Liste der Bezugszeichen

- 1: Reduktionsaggregat
- 2: Topgasabfuhrleitung
- 3: Heizeinrichtung
- 4: Reduktionsgasleitung
- 5: Brenngaszufuhrleitung
- 6: Sauerstoffzufuhrleitung
- 7: erste Prozessgaszufuhrleitung
- 8: CO₂-Abtrenneinrichtung
- 9: zweite Prozessgaszufuhrleitung
- 10: Anlage zur Herstellung von Koks
- 11: Einrichtung zur Vorwärmung der ersten Teilmenge des Prozessgases
- 12: Reinigungseinrichtung zur Reinigung von Gasen
- 13: Topgaszufuhrleitung
- 14: Restgaszufuhrleitung
- 15: Zufuhrleitung zur Zufuhr eines Gasgemisches
- 16: Einrichtung zur Beeinflussung der Temperatur und/oder der chemischen Zusammensetzung des Reduktionsgases
- 17: zweite Brenngaszufuhrleitung
- 18: Oxidationsgaszufuhrleitung
- 19: Anlage zur Speicherung von Koksofengas
- 20: Feedgasleitung
- 21: Steuerventile

## Patentansprüche

1. Verfahren zur Reduktion von eisenoxidhältigen Einsatzstoffen, bei dem einem die eisenoxidhältigen Einsatzstoffe enthaltenden Reduktionsaggregat ein Reduktionsgas zugeführt wird, wobei das Reduktionsgas dadurch erzeugt wird, dass ein Prozessgas mit Reduktionspotential in eine Heizeinrichtung zum Aufheizen des Prozessgases eingebracht und als Reduktionsgas aus diesem abgezogen wird, und in der Heizeinrichtung eine Übertragung von Wärmeenergie auf das Prozessgas erfolgt, **dadurch gekennzeichnet, dass** die Wärmeenergie in der Heizeinrichtung durch Verbrennung eines Koksofengas umfassenden Brenngases, unter Zugabe von technisch reinem Sauerstoff, gebildet wird, wobei die bei der Verbrennung entstehende Flamme eine adiabatische Flammentemperatur größer als 1000°C, bevorzugt größer als 1300°C, besonders bevorzugt größer als 1500°C, aufweist und die Übertragung der Wärmeenergie auf das Prozessgas durch Mischung des Prozessgases mit den bei der Verbrennung des Brenngases gebildeten Verbrennungsprodukten erfolgt.

2. Verfahren nach Anspruch 1, **dadurch gekennzeichnet, dass** das Prozessgas aus einer CO₂-Abtrenneinrichtung stammt.

3. Verfahren nach einem der Ansprüche 1 oder 2, **dadurch gekennzeichnet, dass** das Brenngas zumindest eine Teilmenge des Prozessgases umfasst.

4. Verfahren nach einem der vorhergehenden Ansprüche, **dadurch gekennzeichnet, dass** das Brenngas aus Koksofengas besteht.

5. Verfahren nach einem der vorhergehenden Ansprüche, **dadurch gekennzeichnet, dass** das zumindest eine Teilmenge des Prozessgases vor dem Einbringen in die Heizeinrichtung einer Vorwärmung durch indirekten Wärmetausch unterzogen wird.

6. Verfahren nach einem der vorhergehenden Ansprüche, **dadurch gekennzeichnet, dass** das Brenngas und/oder der technisch reine Sauerstoff vor der Verbrennung des Brenngases in der Heizeinrichtung einer Vorwärmung durch indirekten Wärmetausch unterzogen wird.

7. Verfahren nach einem der Ansprüche 5 oder 6, **dadurch gekennzeichnet, dass** die Vorwärmung der Teilmenge des Prozessgaseses auf eine Temperatur größer als 300°C, vorzugsweise größer als 400°C, noch bevorzugter größer als 600°C erfolgt.

8. Verfahren nach einem der vorhergehenden Ansprüche, **dadurch gekennzeichnet, dass** das aus der Heizeinrichtung abgezogene Reduktionsgas eine Temperatur größer 750°C, vorzugsweise größer 830°C, besonders bevorzugt größer 850°C, hat.

9. Verfahren nach einem der vorhergehenden Ansprüche, **dadurch gekennzeichnet, dass** das Koksofengas vor dessen Verbrennung in der Heizeinrichtung einem Reinigungsvorgang unterzogen wird.

10. Verfahren nach einem der Ansprüche 5 bis 9, **dadurch gekennzeichnet, dass** das bei der Reduktion der eisenoxidhältigen Einsatzstoffe im Reduktionsaggregat verbrauchte Reduktionsgas als Topgas abgezogen wird und die Vorwärmung der Teilmenge des Prozessgases durch indirekten Wärmetausch mit zumindest einer Teilmenge des Topgases und/oder mit einem in der CO₂-Abtrenneinrichtung anfallenden Restgas, und/oder mit einer Gasmischung aus der Teilmenge des abgezogenen Topgases und dem Restgas erfolgt.

11. Verfahren nach einem der vorhergehenden Ansprüche, **dadurch gekennzeichnet, dass** das aus der Heizeinrichtung abgezogene Reduktionsgas, vor dessen Zuführung in das Reduktionsaggregat, einer Teilverbrennung mit technisch reinem Sauerstoff und/oder dem Brenngas unterzogen wird.

12. Vorrichtung zur Durchführung des Verfahrens nach einem der Ansprüche 1 bis 11, umfassend ein Reduktionsaggregat (1) mit einer Topgasabfuhrleitung (2) zur Abfuhr von Topgas aus dem Reduktionsaggregat (1), eine Heizeinrichtung (3) zum Aufheizen eines Prozessgases mit einer in das Reduktiosaggregat (1) mündenden Reduktionsgasleitung (4) und mit zumindest jeweils einer in die Heizeinrichtung (3) mündenden Brenngaszufuhrleitung (5) zur Zufuhr von Brenngas, einer Sauerstoffzufuhrleitung (6) zur Zufuhr von technisch reinem Sauerstoff und einer ersten Prozessgaszufuhrleitung (7) zur Zufuhr zumindest einer ersten Teilmenge eines Prozessgases, **dadurch gekennzeichnet, dass** die Brenngaszufuhrleitung (5) aus einer Anlage (10) zur Herstellung von Koks, insbesondere eine Kokerei und/oder aus einer Anlage (19) zur Speicherung von Koksofengas, insbesondere ein Gasometer, entspringt.

13. Vorrichtung nach Anspruch 12, **dadurch gekennzeichnet, dass** in der Prozessgaszufuhrleitung (7) eine CO₂-Abtrenneinrichtung (8) zur Abtrennung von CO₂ aus einem, über eine Feedgasleitung (20) eingebrachten Feedgas, angeordnet ist.

14. Vorrichtung nach einem der Ansprüche 12 oder 13, **dadurch gekennzeichnet, dass** eine in die Brenngaszufuhrleitung (5) mündende zweite Prozessgaszufuhrleitung (9) zur Zufuhr zumindest einer zweiten Teilmenge des Prozessgases vorhanden ist.

15. Vorrichtung nach einem der Ansprüche 12 bis 14, **dadurch gekennzeichnet, dass** in der ersten Prozessgaszufuhrleitung (7) eine Einrichtung (11) zur Vorwärmung der ersten Teilmenge des Prozessgases angeordnet ist.

16. Vorrichtung nach einem der Ansprüche 14 oder 15, **dadurch gekennzeichnet, dass** in der Brenngaszufuhrleitung (5), vor der in die Brenngaszufuhrleitung (5) mündenden zweiten Prozessgaszufuhrleitung (9), eine Reinigungseinrichtung (12) zur Reinigung von Gasen vorhanden ist.

17. Vorrichtung nach einem der Ansprüche 15 oder 16, **dadurch gekennzeichnet, dass** in die Einrichtung (11) zur Vorwärmung der ersten Teilmenge des Prozessgases eine Topgaszufuhrleitung (13) zur Zufuhr zumindest einer Teilmenge des Topgases und/oder eine Restgaszufuhrleitung (14) zur Zufuhr eines aus der CO₂-Abtrenneinrichtung (8) stammenden Restgases und/oder eine Zufuhrleitung (15) zur Zufuhr eines Gasgemisches aus der Teilmenge des Topgases und des Restgases mündet.

18. Vorrichtung nach einem der Ansprüche 12 bis 17, **dadurch gekennzeichnet, dass** in der Reduktionsgasleitung (4) eine Einrichtung (16) zur Beeinflussung der Temperatur und/oder der chemischen Zusammensetzung des Reduktionsgases angeordnet ist.

19. Verwendung der Vorrichtung nach einem der Ansprüche 12 bis 18 zur Durchführung des Verfahrens nach einem der Ansprüche 1 bis 11.
